# FASCICULE DE BREVET EUROPEEN

(11) **EP 4 260 183 B1**
(45) Date de publication et mention de la délivrance du brevet: **19.08.2026**
(21) Numéro de dépôt: 21824623.9
(22) Date de dépôt: 24.11.2021
(51) Int. Cl.: G06F 9/451, G06V 10/40, G06N 20/00, G06V 10/25, G06V 30/10

(54) **PROCEDE DE CONSTRUCTION D'UNE BASE DE CONNAISSANCE D´INTERFACE UTILISATEUR, PRODUIT PROGRAMME D'ORDINATEUR, MEDIUM DE STOCKAGE ET MACHINE DE CALCUL CORRESPONDANTS**
VERFAHREN, COMPUTERPROGRAMM, SPEICHERMEDIUM UND VORRICHTUNG ZUM AUFBAU EINER WISSENSBASIS FÜR BENUTZERSCHNITTSTELLEN
METHOD, COMPUTER PROGRAM, STORAGE MEDIUM AND APPARATUS FOR BUILDING A USER INTERFACE KNOWLEDGE BASE

(30) Priorité: 08.12.2020 FR 2012822
(43) Date de publication de la demande: 18.10.2023
(73) Titulaire: Orange, 92130 Issy-les-Moulineaux (FR)
(72) Inventeur: LAURENT, Sonia, 92326 CHÂTILLON CEDEX (FR); FLOURY, Cédric, 92326 CHÂTILLON CEDEX (FR)
(74) Mandataire: Vidon Brevets & Stratégie
(86) Numéro de dépôt international: PCT/FR2021/052082
(87) Numéro de publication internationale: WO 2022/123135

(56) Documents cités:
- US-A1- 2011 047 488
- US-A1- 2011 075 940
- US-A1- 2017 060 368
- US-A1- 2018 157 386
- US-A1- 2019 018 675
- US-A1- 2019 087 691
- US-A1- 2019 250 891
- YEH T ET AL: "Sikuli: Using GUI Screenshots for Search and Automation", 4 October 2009 (2009-10-04), pages 183 - 192, XP002630485, ISBN: 978-1-60558-745-5, Retrieved from the Internet <URL:http://groups.csail.mit.edu/uid/projects/sikuli/sikuli-uist2009.pdf> [retrieved on 20110329]
- ALBORZ REZAZADEH SERESHKEH ET AL: "VASTA: A Vision and Language-assisted Smartphone Task Automation System", ARXIV.ORG, CORNELL UNIVERSITY LIBRARY, 201 OLIN LIBRARY CORNELL UNIVERSITY ITHACA, NY 14853, 4 November 2019 (2019-11-04), XP081525331

## Description

### 1. DOMAINE TECHNIQUE

Le domaine de l'invention est celui de l'aide aux utilisateurs de terminaux.

Plus précisément, l'invention concerne une solution de construction d'une base de connaissance d'un utilisateur disposant d'au moins un terminal comportant un écran.

Une fois construite (au sens où elle contient des données collectées), la base de connaissance peut par exemple être utilisée par un assistant intelligent configuré pour proposer une aide contextuelle à l'utilisateur en fonction notamment du contenu de la base de connaissance, et donc en fonction des usages de l'utilisateur sur son (au moins un) terminal.

Par « terminal », on entend notamment, mais non exclusivement, un ordinateur personnel (fixe ou portable), une tablette numérique, un assistant numérique personnel, un smartphone, un poste de travail, etc., ou tout autre dispositif qu'un utilisateur peut utiliser pour recevoir, envoyer ou rechercher des contenus de type texte et/ou image et/ou son et/ou vidéo.

Par « contenu », on entend notamment, mais non exclusivement, un courrier électronique, un message (instantané ou non), un document, une recherche (effectuée par exemple avec un navigateur web), un fil d'actualité d'un réseau social, un contenu publié sur un réseau social, etc.

L'invention peut s'appliquer dans de nombreux domaines, par exemple dans le domaine des entreprises qui souhaitent proposer des services innovants à leurs salariés ou clients et les aider au quotidien sur plusieurs axes (productivité, bien-être et écologie) via des assistants professionnels ou personnels (en B2B (business to business) ou B2C (business to consumer)).

L'invention peut également s'appliquer dans d'autres domaines : éducation (pour les élèves et les étudiants), développement personnel (pour tout utilisateur), etc.

### 2. ARRIÈRE-PLAN TECHNOLOGIQUE

De nombreux assistants intelligents visent à aider des utilisateurs sur leur terminal (PC, smartphone, tablette, etc.) en proposant de l'aide contextuelle proactive suite à l'analyse des différentes activités déjà menées par l'utilisateur sur les applications installées sur le terminal. Les données collectées, et stockées dans la base de connaissance, sont par exemple utilisées par l'agent intelligent pour détecter des répétitions dans les activités qui pourraient alors faire l'objet d'une notification à l'utilisateur pour l'aider dans son activité ou lui proposer une automatisation de tâche.

C'est particulièrement vrai désormais dans le monde de l'entreprise digitale qui souhaite offrir des assistants intelligents qui suivent au fil de l'eau le salarié et doivent l'assister pour améliorer sa productivité, son bien-être ou les aspects écologiques via l'économie d'énergie ou de ressources numériques et donc physiques. Par exemple, l'assistant intelligent de l'application Gmail propose notamment la complétion et la rédaction automatique de réponses à des courriers électroniques (mails).

Les assistants intelligents actuels se trouvent intégrés aux applications. Il en découle que chaque assistant intelligent intègre, ou coopère avec, son propre mécanisme de collecte de données, pour créer sa propre base de connaissance.

Un inconvénient est que chaque base de connaissance est liée à une application s'exécutant sur le terminal, et qu'il est donc nécessaire d'avoir autant de bases de connaissance que d'applications.

Un autre inconvénient est qu'il faut fréquemment mettre à jour les mécanismes de collecte de données car les applications évoluent rapidement. Par exemple, si une application intégrant son propre système de tchat (messagerie instantanée interne) est mise à jour, il faut alors également mettre à jour le module (mécanisme de collecte) qui s'interface avec cette application pour obtenir les informations échangées via le système de tchat (c'est-à-dire les échanges de l'utilisateur avec les autres personnes via la messagerie instantanée interne de cette application).

Un autre inconvénient est que, pour chaque application, le mécanisme de collecte de données est différent et doit s'interfacer avec les APIs (« Application Programming Interface » en anglais ou « interface de programmation d'application » en français) spécifiques de cette application (à supposer que celle-ci met à disposition des APIs, ce qui n'est pas toujours le cas). La multiplication des applications exécutées par les terminaux rend la tâche de plus en plus difficile. L'art antérieur US 2017/060368 A1 (KOCHURA NADIYA [US]), 2 mars 2017, divulgue des techniques de reconnaissance de composants d'interface utilisateur à partir d'images (p.ex. captures/tampons d'affichage), l'association de ces composants à des coordonnées de rendu, et l'exploitation de ces informations pour piloter des interactions/actions au niveau de l'interface.

L'art antérieur US 2011/047488 A1 (BUTIN EMMA [IL] ET AL), 24 février 2011, divulgue la capture d'une interface graphique sous forme de capture d'écran, l'analyse de cette image pour identifier des contrôles GUI (avec possibilité d'OCR), ainsi que l'enregistrement d'images de contrôles pour un repérage/exécution ultérieurs dans un cadre d'assistance automatisée. L'art antérieur US 2011/075940 A1 (DEAVER F SCOTT [US]), 31 mars 2011, divulgue un système de surveillance de l'usage d'un ordinateur comprenant la capture d'images de tout ou partie de l'écran, l'extraction d'informations à partir des images (notamment du texte via OCR) et la conservation/archivage de ces informations en lien avec l'activité observée.

La présente demande vise à proposer des améliorations à au moins certains des inconvénients de l'état de la technique.

### 3. RÉSUMÉ

Selon un premier aspect, la présente demande concerne un procédé, mis en œuvre par une machine de calcul, de construction d'une base de connaissance.

Dans certains modes de réalisation de la présente application, ledit procédé comprend, au cours d'une utilisation d'un terminal, ou suite à cette utilisation, au moins une mise à jour de la base de connaissance en fonction d'informations extraites de zones applicatives utiles d'une image numérique d'une capture d'au moins une partie du rendu d'un écran dudit terminal.

Dans certains modes de réalisation de la présente application, il est proposé un procédé, mis en œuvre par une machine de calcul (30), de construction d'une base de connaissance (DB), caractérisé en ce qu'il comprend au moins une mise à jour (S6) d'informations d'usage contenues dans la base de connaissance (DB) en fonction d'informations extraites de zones applicatives utiles d'une image numérique d'une capture d'au moins une partie du rendu d'au moins un écran d'un terminal, les zones applicatives utiles étant des zones contenant au moins une donnée fournie à ou reçue par au moins une application via ledit au moins écran.

Ainsi, la solution proposée repose sur une nouvelle approche consistant à construire une base de connaissance d'un utilisateur en exploitant des technologies de capture d'écran et d'analyse d'image, sur un rendu d'au moins un écran d'au moins un terminal qu'il utilise (ou vient d'utiliser).

Un avantage de la solution proposée est qu'elle est simple à implémenter, au moins selon certains modes de réalisation, puisqu'il suffit, outre le (au moins un) terminal dont dispose déjà l'utilisateur, d'une machine de calcul (éventuellement celle déjà présente dans le terminal).

Un autre avantage de la solution proposée, dans au moins certains modes de réalisation de la présente application, est qu'elle peut permettre une construction générique de la base de connaissance, en s'affranchissant par exemple de l'accès aux API de chaque application exécutée par le terminal. En d'autres termes, du fait qu'elle n'est pas basée sur les APIs de la ou les applications exécutées par le terminal, la solution proposée peut permettre, au moins selon certains modes de réalisation, la création d'une base de connaissance indépendante (« agnostique ») de cette ou ces applications, en ce qui concerne la manière de collecter des informations liées à l'utilisation de cette ou ces applications. Donc la solution proposée peut donc nécessiter moins de contraintes de réalisation, dans au moins certains modes de réalisation de la présente application.

Un autre avantage de la solution proposée, dans au moins certains modes de réalisation de la présente application, est qu'un assistant intelligent configuré pour utiliser le contenu de cette base de connaissance peut posséder lui aussi cette caractéristique d'indépendance vis-à-vis de la ou les applications utilisées sur le terminal. En d'autres termes, l'assistant intelligent n'a pas à être spécifique à une application et peut coopérer avec la base de connaissance générique, qui peut contenir des informations liées à plusieurs applications (même si dans une implémentation particulière, elle peut aussi contenir des informations liées à une seule application).

Encore un autre avantage de la solution proposée, au moins selon certains modes de réalisation, est que même si la ou les applications évoluent, ou encore si l'utilisateur ajoute une application sur son terminal, la solution proposée peut continuer à fonctionner sans nécessiter de mise à jour, puisqu'elle s'appuie uniquement sur des extractions d'écran (partielles ou totales).

Dans certains modes de réalisation de la présente application, selon une première implémentation, la capture porte sur la totalité du rendu de l'écran.

Dans cette première implémentation, le procédé gère l'écran dans sa totalité, sans chercher à connaître le nombre de fenêtre applicative affichée à l'écran. Une fenêtre applicative est une fenêtre liée à une exécution d'une application par le terminal. La première implémentation s'applique notamment dans le cas où le terminal ne peut afficher qu'une seule fenêtre applicative à la fois (cas de certains terminaux de type smartphone par exemple). Dans le cas où le terminal permet le multifenêtrage (c'est-à-dire peut afficher simultanément plusieurs fenêtres applicatives), la première implémentation peut également s'appliquer mais le procédé ne gère pas chaque fenêtre applicative séparément (cas par exemple où le système d'exploitation du terminal ne permet pas de récupérer certains événements liés au multifenêtrage : ouverture d'une fenêtre applicative, récupération de la position et de la taille d'une fenêtre applicative, etc.).

Dans certains modes de réalisation de la présente application, selon une deuxième implémentation, la capture porte sur une partie du rendu de l'écran correspondant à au moins une fenêtre applicative affichée sur l'au moins un écran.

Dans cette deuxième implémentation, le procédé peut gérer séparément plusieurs fenêtres applicatives affichées à l'écran (par exemple, chaque fenêtre applicative affichée à l'écran). Cela peut donc permettre, au moins selon certains modes de réalisation, d'améliorer la complétude des informations collectées dans la base de connaissance, en obtenant séparément les informations propres à plusieurs fenêtres applicatives (par exemple chaque fenêtre applicative).

Dans certains modes de réalisation de la présente application, selon la deuxième implémentation, sur détection d'une ouverture de la fenêtre applicative sur l'écran, le procédé comprend un stockage dans la base de connaissance d'informations sur la position, la taille et/ou un rang d'affichage de la fenêtre applicative, et, pour une nouvelle mise à jour de la base de connaissance, la capture est fonction des informations sur la position, la taille et/ou le rang d'affichage.

Ceci peut permettre de capturer aisément par exemple chaque fenêtre applicative, pour chaque nouvelle mise à jour de la base de connaissance. On se place ici dans le cas où, depuis son ouverture jusqu'à sa fermeture, une même fenêtre applicative fait l'objet de plusieurs captures successives.

Dans certains modes de réalisation de la présente application, s la deuxième implémentation, si le terminal permet l'affichage simultané de plusieurs fenêtres applicatives sur l'écran, la mise à jour de la base de connaissance est effectuée dans une entrée distincte de la base de connaissance pour chacune des fenêtres applicatives.

De cette façon, dans certains modes de réalisation de la présente application, la base de connaissance peut être encore plus complète puisqu'elle possède plusieurs entrées dédiées chacune à une des fenêtres applicatives. De tels modes de réalisation de la présente application peuvent ainsi aider des assistants intelligents ayant accès à la base de connaissance à effectuer des traitements plus fins et/ou à obtenir de meilleurs résultats, comme par exemple la fourniture à l'utilisateur d'une aide contextuelle mieux ciblée.

Selon l'invention, si le terminal permet l'affichage simultané de plusieurs fenêtres applicatives (F1 à F4) sur l'écran, au moins une mise àjour (S6) de la base de connaissance est effectuée dans une entrée distincte de la base de connaissance pour chacune des fenêtres applicatives.

Selon l'invention, pour une zone applicative utile d'une fenêtre applicative, au moins une mise à jour (S6) de la base de connaissance est effectuée de façon conditionnelle en tenant compte d'un taux de recouvrement de ladite zone applicative utile par une ou plusieurs autres fenêtres applicatives.

Par exemple, dans certains modes de réalisation de la présente application, pour une zone applicative utile d'une fenêtre applicative, chaque mise à jour (S6) de la base de connaissance est effectuée de façon conditionnelle en tenant compte d'un taux de recouvrement de ladite zone applicative utile par une ou plusieurs autres fenêtres applicatives.

Dans certains modes de réalisation de la présente application, le taux de recouvrement de ladite zone applicative utile par une ou plusieurs autres fenêtres applicatives, est fonction :
- d'informations sur la position et/ou la taille de ladite zone applicative utile ;
- d'informations sur un rang d'affichage de la fenêtre applicative ; et/ou
- d'informations sur la position, la taille et/ou un rang d'affichage de la ou des autre(s) fenêtre(s) applicative(s).

Dans certains modes de réalisation de la présente application, au moins une mise à jour (S6) de la base de connaissance, pour la zone applicative utile de la fenêtre applicative, est effectuée uniquement lorsque le taux de recouvrement est inférieur à une première valeur de recouvrement.

Dans certains modes de réalisation de la présente application, selon la deuxième implémentation, pour une zone applicative utile d'une fenêtre applicative, le procédé comprend un calcul d'un taux de recouvrement de ladite zone applicative utile par une ou plusieurs autres fenêtres applicatives, en fonction :
- d'informations sur la position et/ou la taille de ladite zone applicative utile ;
- d'informations sur un rang d'affichage de la fenêtre applicative ; et/ou
- d'informations sur la position, la taille et/ou un rang d'affichage de la ou des autre(s) fenêtre(s) applicative(s),
et une mise à jour de la base de connaissance, pour la zone applicative utile de la fenêtre applicative, est effectuée uniquement lorsque le taux de recouvrement est inférieur à une première valeur de recouvrement.

Ainsi, dans le cas où une zone applicative utile est recouverte avec un taux de recouvrement supérieur ou égal à la première valeur de recouvrement, on peut par exemple éviter une mise à jour de la base de connaissance avec des informations incomplètes et/ou incompréhensibles.

Selon l'invention, selon la deuxième implémentation, sur détection d'un redimensionnement et/ou d'un déplacement d'une fenêtre applicative, le procédé comprend un stockage dans la base de connaissance de nouvelles informations sur la position, la taille et/ou le rang d'affichage de la fenêtre applicative, et, pour au moins une nouvelle mise à jour de la base de connaissance (par exemple chaque mise à jour de la base de connaissance), la capture est fonction des nouvelles informations sur la position, la taille et/ou le rang d'affichage.

De cette façon, on peut permettre, au moins selon certains modes de réalisation, une bonne capture de la fenêtre applicative, quelle que soit la manière dont elle est modifiée sur l'écran, par redimensionnement et/ou déplacement, depuis son ouverture jusqu'à sa fermeture.

Dans certains modes de réalisation de la présente application, les zones applicatives utiles sont des zones qui ne sont pas liées à une présentation de fonctionnalités d'au moins une application exécutée par le terminal et pour laquelle une fenêtre applicative est affichée sur l'écran.

En d'autres termes, le procédé ignore les zones d'une fenêtre applicative qui sont réservées à la présentation des fonctionnalités (menus, boutons et/ou autres mécanismes) d'une application. Ce sont les zones restantes (c'est-à-dire non ignorées) qui constituent les zones applicatives utiles. Elles contiennent des données utiles entrantes, que l'utilisateur fournit à l'application, et des données utiles sortantes, que l'application fournit à l'utilisateur. Ainsi, on peut par exemple éviter d'ajouter dans la base de connaissance des informations qui ne seraient pas liées à l'usage que fait l'utilisateur d'une application sur son terminal, mais seraient des données liées uniquement à la présentation de fonctionnalités de l'application (et donc ne reflétant pas l'usage que fait l'utilisateur de son terminal).

Dans certains modes de réalisation de la présente application, l'extraction d'informations des zones applicatives utiles comprend une extraction appartenant au groupe comprenant : extraction d'informations sur du texte apparaissant dans les zones applicatives utiles, par une technique de reconnaissance optique de caractères ; et extraction d'informations sur des éléments d'image apparaissant dans les zones applicatives utiles, par une technique de vision par ordinateur.

De cette façon, la base de connaissance peut être enrichie avec deux types d'informations : celles extraites sur du texte et/ou celles extraites sur des éléments d'image. On couvre ainsi la majeure partie, voire dans certains cas la totalité, des données utiles (entrantes ou sortantes) échangées entre l'utilisateur et la ou les applications exécutées sur le terminal.

Dans certains modes de réalisation de la présente application, l'extraction (S4) d'informations des zones applicatives utiles tient compte d'un score de confiance de détection.

Dans certains modes de réalisation de la présente application, l'extraction d'informations des zones applicatives utiles comprend une prise en compte d'une information extraite quand elle est associée à un score de confiance de détection supérieur à une première valeur de confiance.

De cette façon, une telle prise en compte peut par exemple aider à améliorer , au moins selon certains modes de réalisation, la qualité des informations collectées dans la base de connaissance.

Dans certains modes de réalisation de la présente application, l'extraction d'informations des zones applicatives utiles comprend, après détection qu'une zone applicative utile contient une vidéo, une mise à jour ultérieure de la base de connaissance en fonction d'informations extraites de la vidéo.

Ceci peut aider à d'éviter d'utiliser trop de ressources système (ressources de calcul notamment) pendant une exécution en temps-réel du procédé, tout en permettant un enrichissement simplement décalé (par exemple le soir ou la nuit, quand le terminal est moins utilisé) de la base de connaissance avec des informations extraites d'une vidéo. Dans une variante, dégradée mais moins coûteuse car n'effectuant pas la mise à jour ultérieure, le procédé peut ignorer une zone applicative utile s'il détecte que celle-ci contient une vidéo.

Dans certains modes de réalisation de la présente application, une nouvelle mise à jour de la base de connaissance est effectuée sur un événement déclencheur appartenant au groupe comprenant un événement périodique et un événement indiquant une fin d'entrée de données via un ou plusieurs matériels d'entrée d'une interface utilisateur.

Augmenter le nombre de mises à jour peut aider dans certains modes de réalisation de la présente application, à augmenter la complétude de la base de connaissance. La périodicité de l'événement périodique peut être choisie, dans certains modes de réalisation, de manière à essayer d'enregistrer au mieux les échanges de données utiles entre l'utilisateur et la ou les applications, tout en essayant d'utiliser au mieux les ressources de la machine de calcul. Dans une variante, l'événement est récurrent mais non-périodique. L'événement de fin d'entrée de données indique que l'utilisateur est inactif sur son terminal. Il s'agit par exemple d'une fin de saisie au clavier ou d'une fin de déplacement d'un dispositif de pointage (souris, trackball, trackpoint, joystick, écran tactile, etc.).

Dans certains modes de réalisation de la présente application, l'au moins une mise à jour de la base de connaissance comprend un ajout limité à des informations non déjà contenues dans la base de connaissance.

De cette façon, dans certains modes de réalisation, on peut limiter les opérations d'écriture dans la base de connaissance.

Selon un autre aspect, il est proposé un produit programme d'ordinateur qui comprend des instructions de code de programme qui, quand elles sont exécutées par une machine de calcul (ordinateur, processeur, etc.), provoquent la réalisation du procédé précité dans l'un quelconque de ses différents modes de réalisation.

Selon encore un autre aspect, il est proposé un médium de stockage lisible par ordinateur et non transitoire, stockant un programme d'ordinateur comprenant un jeu d'instructions exécutables par une machine de calcul (ordinateur, processeur, etc.) pour mettre en œuvre le procédé précité dans l'un quelconque de ses différents modes de réalisation.

Selon encore un autre aspect, il est proposé une machine de calcul configurée pour réaliser le procédé précité dans l'un quelconque de ses différents modes de réalisation.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
[Fig. 1] présente un organigramme simplifié du procédé selon l'invention ;
[Fig. 2] est un exemple de rendu d'un écran d'un terminal, permettant d'illustrer un exemple d'application du procédé de la figure 1 ; et
[Fig. 3] présente la structure d'une machine de calcul, selon un mode de réalisation particulier, configurée pour réaliser le procédé de la figure 1.

### 5. DESCRIPTION DÉTAILLÉE

Sur toutes les figures du présent document, les éléments et étapes identiques sont désignés par une même référence numérique.

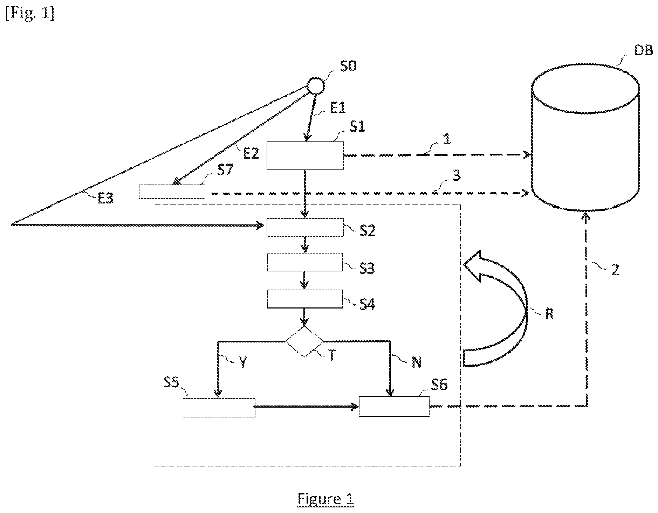

On présente maintenant, en relation avec l'organigramme de la **figure 1**, un mode de réalisation particulier du procédé selon l'invention de construction d'une base de connaissance (référencée DB, pour « Data Base » en anglais) associée à un utilisateur d'un terminal. Une fois cette base de connaissance suffisamment riche d'informations, un assistant intelligent peut l'exploiter pour offrir des services innovants tels que par exemple une aide à l'apprentissage.

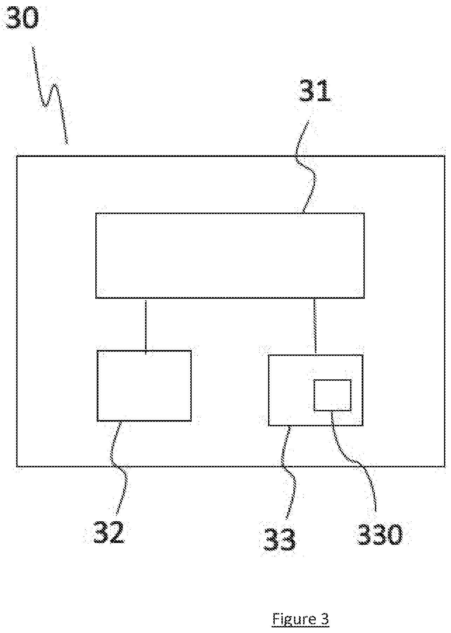

Le procédé est mis en œuvre par une machine de calcul (aussi appelée « système » dans la suite de la description) dont un exemple de structure est présenté plus bas, en relation avec la figure 3. Dans une première implémentation, la machine de calcul mettant en œuvre le procédé est intégrée dans, ou confondue avec, le terminal de l'utilisateur (ce terminal est par exemple un ordinateur personnel fixe ou portable, une tablette numérique, un assistant numérique personnel, un smartphone, un poste de travail, etc.). Dans une deuxième implémentation, la machine de calcul mettant en œuvre le procédé est intégrée dans, ou confondue avec, un autre dispositif qui coopère avec le terminal de l'utilisateur (cet autre dispositif est par exemple une passerelle domestique, aussi appelée « box Internet »).

Dans ce mode de réalisation particulier, on suppose que le terminal de l'utilisateur permet le multifenêtrage, c'est-à-dire l'affichage simultané de plusieurs fenêtres applicatives sur l'écran du terminal. Comme déjà mentionné plus haut, une fenêtre applicative est une fenêtre liée à l'exécution d'une application par le terminal. Il existe de nombreuses applications pouvant être exécutées par le terminal :
- applications de gestion de fichiers (par exemple « Explorateur Windows » ou « Finder » d'Apple) ;
- applications de messagerie, aussi appelées « clients de messagerie » (par exemple « Microsoft Outlook » ou « Mail » d'Apple) ;
- applications de messagerie instantanée (par exemple « Whatsapp ») ;
- applications de conférence multimédia ;
- navigateurs web (par exemple « Microsoft Internet Explorer » ou « Google Chrome ») ;
- applications de traitement de texte (par exemple « Word ») ;
- applications de type tableur (par exemple « Excel ») ;
- applications de présentation (par exemple « Microsoft PowerPoint » ou « Keynote » d'Apple) ;
- etc.

On suppose également, dans le mode de réalisation détaillé, que le système d'exploitation du terminal permet de récupérer, et de fournir à la machine de calcul qui implémente le présent procédé, certains événements liés au multifenêtrage, comme :
- un événement E1 indiquant l'ouverture d'une nouvelle fenêtre applicative, et contenant des informations sur la position, la taille et/ou le rang d'affichage de la fenêtre applicative ;
- un événement E2 indiquant la fermeture d'une fenêtre applicative ;
- un événement E3 indiquant le redimensionnement et/ou le déplacement d'une fenêtre applicative, et contenant des informations sur la nouvelle position et/ou la nouvelle taille et/ou le nouveau rang d'affichage de la fenêtre applicative.

Les informations sur la position et/ou la taille peuvent permettre de connaître les coordonnées de la fenêtre applicative dans l'écran, c'est-à-dire de savoir précisément à quels pixels de l'écran correspond l'aire de la fenêtre applicative. On se place par exemple dans la situation classique actuelle où la fenêtre applicative est de forme rectangulaire et où les informations sur sa position et/ou sa taille sont formées par une position X,Y (par exemple d'un angle de la fenêtre rectangulaire) et un couple (hauteur, largeur). La présente invention n'est pas limitée aux fenêtres applicatives de forme rectangulaire, mais s'applique quelle que soit la forme (ronde, ovale, etc.).

Le rang d'affichage, aussi appelé « valeur d'ordonnancement », indique par exemple que la fenêtre est affichée au premier plan ou en arrière-plan, derrière une ou plusieurs autres fenêtres.

Dans le mode de réalisation illustré, dans une étape S0, la machine de calcul cherche à détecter des événements liés au multifenêtrage comme au moins certains des évènements précités E1, E2 et/ou E3.

Si un événement E1 est détecté (indiquant l'ouverture d'une nouvelle fenêtre applicative), le procédé peut passer à une étape S1 dans laquelle la machine de calcul crée une nouvelle entrée, aussi appelée nouvelle activité, dans la base de connaissance DB (comme illustré par la flèche référencée 1). Une activité peut donc être associée, dans le mode de réalisation illustré, à une fenêtre applicative particulière affichée sur l'écran du terminal, et regrouper toutes les informations extraites de cette fenêtre applicative (par exemple, comme détaillé par la suite, tous les textes (lus ou écrits par l'utilisateur) apparaissant dans la fenêtre applicative ainsi que les résultats d'analyse sémantique des images manipulées au sein de la fenêtre applicative) de son ouverture jusqu'à sa fermeture. En outre, dans l'étape S1, la machine de calcul peut stocker dans la base de connaissance DB (par exemple dans une table de gestion des fenêtres ouvertes, dont chaque ligne est propre à une fenêtre applicative distincte) des informations sur la position, la taille et/ou le rang d'affichage de la nouvelle fenêtre applicative.

Dans le mode de réalisation illustré, dans une étape S2, la machine de calcul peut capturer, par exemple sous la forme d'une image numérique, une partie du rendu de l'écran correspondant à la fenêtre applicative, grâce aux informations (stockées à l'étape S1) sur la position, la taille et/ou le rang d'affichage de la fenêtre applicative.

Dans une étape S3, la machine de calcul peut identifier des zones applicatives utiles dans l'image numérique résultant de la capture effectuée à l'étape S2. Les zones applicatives utiles sont des zones qui ne sont pas liées à une présentation de fonctionnalités de l'application pour laquelle la fenêtre applicative précitée est affichée sur l'écran du terminal dans le mode de réalisation illustré.

Dans une implémentation particulière de l'étape S3, la machine de calcul peut identifier les zones de la fenêtre applicative réservées aux menus, boutons et/ou autres mécanismes permettant de présenter les fonctionnalités de l'application. Cette identification des zones liées aux fonctionnalités de l'application peut par exemple se faire :
- en couplant des techniques connues de segmentation de l'image en sous-zones rectangulaires avec des techniques connues d'identification via OCR (« Optical Character Recognition » en anglais, « Reconnaissance Optique de Caractères » en français), afin d'identifier des mots-clefs habituels dans ces sous-zones rectangulaires (notamment : « ouvrir », « fichier », « accueil », « insertion », « création », « mise en page », « quitter », « sauvegarder », « yes », « canceled », etc.) ;
- ou via détection d'icônes rondes ou rectangulaires alignées, par des mécanismes de type : intelligence artificielle (IA), classification automatique, vision par ordinateur, etc.

Dans certains modes de réalisation de la présente application, une fois identifiées, les zones réservées à la présentation des fonctionnalités de l'application peuvent être ignorées. Par exemple, seules les zones restantes de la fenêtre applicative sont taguées « zones applicatives utiles » et leur position sur l'écran global est mémorisée.

Dans une étape S4, la machine de calcul peut extraire des informations des zones applicatives utiles identifiées à l'étape S3. Dans certains modes de réalisation de la présente application, deux types d'extraction sont par exemple effectués : extraction d'informations sur du texte apparaissant dans les zones applicatives utiles, par une technique OCR, et extraction d'informations sur des éléments d'image apparaissant dans les zones applicatives utiles, par une technique de vision par ordinateur (permettant par exemple la reconnaissance de texte, la reconnaissance de tableau, la reconnaissance d'élément spécifique (image représentant un animal, un véhicule, etc.)). Les informations que l'on cherche à extraire des zones applicatives utiles peuvent être définies plus généralement comme représentatives des données utiles entrantes, que l'utilisateur fournit à l'application, et/ou des données utiles sortantes, que l'application fournit à l'utilisateur. Cela peut inclure donc toutes les données saisies par l'utilisateur via un ou plusieurs matériels d'entrée d'une interface utilisateur (par exemple un clavier ou un dispositif de pointage de type souris, trackball, trackpoint, joystick, écran tactile, etc.), ainsi que toutes les données reçues par l'utilisateur (notamment des réponses qu'il peut obtenir de l'application elle-même ou de contacts avec qui il communique via l'application, ou encore d'images qu'il manipule ou visualise grâce à l'application).

Dans certains modes de réalisation de la présente application, un élément de texte (ligne par exemple) ou d'image reconnu par une technique de reconnaissance (OCR, vision par ordinateur, etc.) peut être ignoré si le score de confiance associé à la reconnaissance est inférieur à un seuil particulier (paramètre de configuration). En d'autres termes, une information extraite n'est par exemple prise en compte que si elle est associée à un score de confiance de détection supérieur à une première valeur de confiance.

Dans certains modes de réalisation de la présente application, si la machine de calcul détecte qu'une zone applicative utile contient une vidéo, elle peut décider de l'ignorer (en tenant compte par exemple d'au moins un paramètre de configuration). Dans une variante, elle peut décider de traiter cette zone applicative utile a posteriori (mise à jour ultérieure, le soir par exemple, de la base de connaissance en fonction d'informations extraites de la vidéo) pour éviter d'utiliser trop de ressources système lors d'un traitement en temps réel de l'étape S4.

Dans une mise en œuvre particulière, la machine de calcul peut identifier des zones applicatives utiles qui sont recouvertes, totalement ou partiellement, par d'autres fenêtres applicatives. Cette identification peut être effectuée en exploitant directement la table de gestion des fenêtres ouvertes, qui contient leur position, leur taille et/ou leur rang d'affichage (voir étape S1). Si une zone applicative utile est détectée comme étant partiellement ou totalement recouverte, elle peut être ignorée par la machine de calcul à l'étape S4 (aucune information n'en est extraite par exemple). Par exemple, dans certains modes de réalisation, la machine de calcul peut calculer un taux de recouvrement de la zone applicative utile par au moins une autre fenêtre applicative, en fonction de diverses informations (informations sur la position et/ou la taille de la zone applicative utile, informations sur un rang d'affichage de la fenêtre applicative et informations sur la position, la taille et/ou le rang d'affichage de la ou des autres fenêtres applicatives par exemple) et la zone applicative utile peut par exemple être prise en compte en tenant compte du taux de recouvrement. La zone applicative utile peut par exemple être prise en compte seulement si le taux de recouvrement est inférieur à une première valeur de recouvrement.

L'étape S4 peut être suivie d'une étape de test T dans laquelle la machine de calcul détecte si la fenêtre applicative en cours de traitement est une fenêtre nouvellement ouverte (cas, appelé ci-après premier cas, où la présente itération des étapes S2 à S4 est la première itération depuis la détection de l'événement E1), ou bien une fenêtre applicative qui était ouverte (cas, appelé ci-après deuxième cas, où la présente itération des étapes S2 à S4 n'est pas la première itération depuis la détection de l'événement E1).

Dans le premier cas, la machine de calcul peut effectuer dans certains modes de réalisation, une étape S6 dans laquelle les informations (données utiles) extraites à l'étape S4 sont ajoutées dans la base de connaissance DB de l'utilisateur (comme illustré par la flèche référencée 2), en étant rattachées à l'activité (entrée de la base de connaissance) associée à la fenêtre applicative courante (dont l'ouverture a été détecté par l'événement E1).

Dans le deuxième cas, la machine de calcul peut effectuer dans certains modes de réalisation, une étape S5 dans laquelle elle identifie, parmi les informations (données utiles) extraites à l'étape S4, celles (appelées ci-après « nouvelles informations extraites ») qui ne sont pas déjà contenues dans la base de connaissance DB. Puis, la machine de calcul peut effectuer l'étape S6 mais ici en ajoutant par exemple dans la base de connaissance DB seulement les nouvelles informations extraites (s'il n'y en a pas, l'étape S6 n'est pas effectuée), et en les rattachant à l'activité associée à la fenêtre applicative courante. Ainsi, si un texte par exemple a été ajouté (respectivement modifié) dans une zone applicative utile, le procédé peut l'extraire et/ou le mémoriser, en le taguant par exemple avec le statut « ajouté » (ADDED) (respectivement « modifié » (MODIFIED).

Tant que la fenêtre applicative est ouverte et n'est ni redimensionnée ni déplacée, la machine de calcul peut réitérer les étapes S2 à S6 (comme illustré par la flèche référencée R) pour extraire d'autres informations, pour enrichir au fur et à mesure la base de connaissance DB et rendre compte de l'utilisation de l'application par l'utilisateur (c'est-à-dire suivre au fil de l'eau les actions de l'utilisateur et ses interactions avec l'application et/ou ses contacts). Une nouvelle itération, qui se traduit par une nouvelle mise à jour de la base de connaissance, est effectuée sur un événement déclencheur généré par un module de déclenchement (« trigger »), comme par exemple un événement d'échéance périodique (toutes les N secondes par exemple) ou un événement indiquant une fin d'entrée de données via les matériels d'entrée (clavier, dispositif de pointage, etc.) de l'interface utilisateur (événement récupérable via le système d'exploitation du terminal). L'événement déclencheur indiquant une fin d'entrée de données est par exemple utilisé si, lors de la détection d'un événement déclencheur d'échéance périodique (par exemple après N secondes), l'utilisateur est en train d'entrer des données. Dans ce cas, l'événement déclencheur indiquant une fin d'entrée de données permet d'attendre la fin de, ou une pause dans, la saisie de l'utilisateur avant d'effectuer une nouvelle capture d'écran.

Si un événement E2 est détecté, indiquant la fermeture de la fenêtre applicative (du fait par exemple que l'utilisateur a fermé la fenêtre applicative ou quitté l'application, selon le terminal utilisé), le procédé peut passer, dans certains modes de réalisation, à une étape S7 dans laquelle la machine de calcul peut clôturer l'activité associée, en modifiant le statut de cette activité (qui passe par exemple à « terminée ») dans la base de connaissance DB.

Si un événement E3 est détecté, indiquant un redimensionnement et/ou un déplacement de la fenêtre applicative, le procédé peut reprendre par exemple à l'étape S2 pour permettre d'identifier à nouveau des zones applicatives utiles de cette fenêtre applicative et d'en extraire de nouvelles informations (grâce à la nouvelle position et/ou la nouvelle taille et/ou le nouveau rang d'affichage de la fenêtre applicative). La table de gestion des fenêtres ouvertes (qui stocke la liste des fenêtres ouvertes avec leur position, leur taille et/ou leur rang d'affichage) peut être mise à jour également en conséquence.

Toutes les opérations et étapes décrites ci-dessus peuvent être effectuées pour chaque application, et donc pour chaque fenêtre applicative. Ainsi, dans la base de connaissance DB, à une activité (associée à une fenêtre applicative) peut donc être rattachée une liste d'informations extraites et horodatées.

### Variante du procédé

Dans une variante, la machine de calcul peut ne pas gérer certains des événements E1, E2 et/ou E3 et ne pas effectuer certaines des étapes S0, S1 et S7. Elle peut exécuter par exemple le mécanisme itératif des étapes S2 à S6 tel que décrit plus haut avec la figure 1, à la différence près que dans l'étape S2 elle peut capturer, sous la forme d'une image numérique, la totalité du rendu de l'écran (et non pas seulement une partie correspondant à une fenêtre applicative particulière).

En d'autres termes, dans un tel mode de réalisation, une seule activité est considérée et le procédé recalcule à fréquence régulière les zones applicatives utiles pour en extraire des informations venant enrichir la base de connaissance DB. Avec cette variante, la base de connaissance est moins complète que dans le mode de réalisation de la figure 1, mais cela permet déjà à des assistants intelligents d'offrir des services d'aide contextuelle.

Cette variante peut s'appliquer par exemple dans le cas où le terminal ne peut afficher qu'une seule fenêtre applicative à la fois (cas d'un terminal de type smartphone par exemple). Cette variante peut également s'appliquer dans le cas où le terminal permet le multifenêtrage mais où la machine de calcul n'est pas en mesure de récupérer les événements E1, E2 et/ou E3 liés au multifenêtrage (par exemple parce que le système d'exploitation du terminal ne le permet pas, ou pour d'autres raisons).

### Exemple d'application

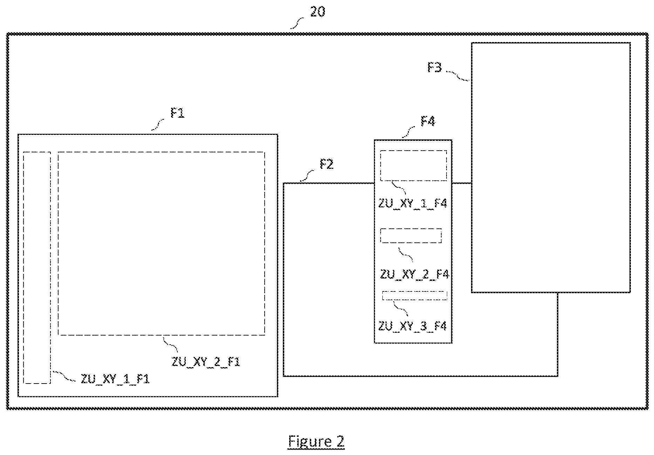

On présente maintenant un exemple d'application du procédé de la figure 1, en relation avec la **figure 2** qui illustre un exemple de rendu d'un écran 20 d'un terminal.

On suppose que trois fenêtres applicatives F1, F2 et F3 sont déjà ouvertes et que la table de gestion des fenêtres ouvertes contient quatre informations pour chaque fenêtre (à savoir : identifiant de la fenêtre, position de la fenêtre, taille de la fenêtre et/ou rang d'affichage de la fenêtre) :
- pour la fenêtre F1 : « Conférence multimédia - Etat de l'art », « position_XY_F1 », « Taille_F1 », « Ordonnancement 1 » ;
- pour la fenêtre F2 : « Explorateur de fichiers - Ce PC », « position_XY_F2 », « Taille _F2 », « Ordonnancement 1 » ; et
- pour la fenêtre F3 : « IM - Lync », « position_XY_F3 », « Taille_F3 », « Ordonnancement 2 ».

On suppose également que sur son terminal (par exemple son PC), l'utilisateur a reçu une notification d'une application de messagerie instantanée et a cliqué dessus, provoquant l'ouverture d'une nouvelle fenêtre applicative F4 (fenêtre liée à l'application de messagerie instantanée).

Dans l'étape S0, la machine de calcul reçoit un évènement E1 indiquant l'ouverture de la fenêtre F4 et contenant les informations suivantes : identifiant de la fenêtre (« IM <NomDeLaPersonne> »), position de la fenêtre (« position_XY_F4 »), taille de la fenêtre (« Taille_F4 ») et rang d'affichage de la fenêtre (« Ordonnancement 2 »).

Dans l'étape S1, la machine de calcul crée une nouvelle activité (« A1 : IM <NomDeLaPersonne> ») dans la base de connaissance et stocke dans la table de gestion des fenêtres ouvertes les informations précitées relatives à la fenêtre F4.

Dans l'étape S2, la machine de calcul capture, sous la forme d'une image numérique, une partie du rendu de l'écran 20 correspondant à la fenêtre F4.

Dans l'étape S3, la machine de calcul identifie trois zones applicatives utiles, référencées ZU_XY_1_F4, ZU_XY_2_F4 et ZU_XY_3_F4 sur la figure 2.

Dans l'étape S4, la machine de calcul extrait des informations des zones applicatives utiles identifiées à l'étape S3, par exemple des informations de texte :
- information extraite de la zone ZU_XY_1_F4 : <text1> ;
- information extraite de la zone ZU_XY_2_F4 : <text2> ; et
- information extraite de la zone ZU_XY_3_F4 : <text3>.

Dans l'étape S6, la machine de calcul met à jour l'activité « A1 : IM <NomDeLaPersonne> » dans la base de connaissance, en ajoutant un lot d'informations horodatées, comme par exemple :
- identifiant du lot d'informations horodatées : « Evénement1_Timestamp » ;
- information extraite de la zone ZU_XY_1_F4 : <textl> ;
- information extraite de la zone ZU_XY_2_F4 : <text2> ; et
- information extraite de la zone ZU_XY_3_F4 : <text3>.

On suppose qu'après N secondes, la machine de calcul détecte un premier événement déclencheur et que rien n'a changé sur l'écran depuis la capture précédente (étape S2 précédente). La machine de calcul effectue, pour la fenêtre F4, une nouvelle itération des étapes S2, S3 et S4 (qui vont fournir les mêmes résultats que lors de l'itération précédente) puis exécute l'étape S5. Dans cette étape S5, la comparaison avec les éléments de la base de connaissance précédemment stockés (lot d'informations horodatées portant l'identifiant « Evénement1_Timestamp ») indique qu'aucune nouvelle information n'a été extraite. Le traitement s'arrête là (l'étape S6 n'est pas effectuée).

On suppose qu'après N autres secondes, la machine de calcul détecte un deuxième événement déclencheur, et que l'utilisateur est en train d'effectuer une saisie de texte (<text4>) au clavier dans la zone utile « ZU_XY_3_F4 ». La machine de calcul attend alors un troisième événement déclencheur indiquant une fin de saisie (correspondant à une fin de saisie réelle ou à une pause suffisamment conséquente dans la saisie pour représenter une fin de saisie). Suite au troisième événement déclencheur, la machine de calcul effectue une nouvelle itération des étapes S2, S3 et S4 pour la fenêtre F4. La nouvelle itération de l'étape S4 ne fournit pas les mêmes résultats que lors de l'itération précédente, puisque la machine de calcul extrait les informations suivantes de la zone applicative utile ZU_XY_3_F4 : <text3> et <text4> (au lieu de <text3> seulement). Puis la machine de calcul exécute l'étape S5 et la comparaison avec les éléments de la base de connaissance précédemment stockés pour la fenêtre F4 (lot d'informations horodatées portant l'identifiant « Evénement1_Timestamp ») indique qu'une nouvelle information <text4> a été extraite. Le traitement se poursuit par l'étape S6 dans laquelle la machine de calcul met à jour l'activité « A1 : IM <NomDeLaPersonne> » dans la base de connaissance, en ajoutant un nouveau lot d'informations horodatées, comme par exemple:
- identifiant du lot d'informations horodatées : « Evénement2 _Timestamp » ; et
- nouvelle information extraite de la zone ZU_XY_3_F4 : ADDED = <text4>.

Poursuivons l'exemple en considérant le traitement de la fenêtre F1, sur laquelle l'utilisateur suit une visio-conférence.

A l'ouverture de la fenêtre applicative F1 (liée à une application de visio-conférence), la machine de calcul reçoit, dans l'étape S0, un évènement E1 indiquant l'ouverture de la fenêtre F1 et contenant les informations suivantes : identifiant de la fenêtre (« Conférence multimédia - Etat de l'art »), position de la fenêtre (« position_XY_F1 »), taille de la fenêtre (« Taille_F1 ») et rang d'affichage de la fenêtre (« Ordonnancement 1 »).

Dans l'étape S1, la machine de calcul crée une nouvelle activité (« A2 : Conférence multimédia <NomDeLaPersonne> ») dans la base de connaissance et stocke dans la table de gestion des fenêtres ouvertes les informations précitées relatives à la fenêtre F1.

Dans l'étape S2, la machine de calcul capture, sous la forme d'une image numérique, une partie du rendu de l'écran 20 correspondant à la fenêtre F1.

Dans l'étape S3, la machine de calcul identifie deux zones applicatives utiles, référencées ZU_XY_1_F1 et ZU_XY_2_F1 sur la figure 2.

Dans l'étape S4, la machine de calcul extrait des informations des zones applicatives utiles identifiées à l'étape S3, par exemple des informations de texte :
- information extraite de la zone ZU_XY_1_F1 : <vide> (on suppose dans cet exemple qu'il n'y pas de texte extrait car les scores de confiance de détection via OCR ne permettent pas de valider le texte extrait car celui-ci est trop petit) ;
- information extraite de la zone ZU_XY_2_F1 : <text1'>.

Dans l'étape S6, la machine de calcul met à jour l'activité « A2 : Conférence multimédia <NomDeLaPersonne> » dans la base de connaissance, en ajoutant un lot d'informations horodatées, comme par exemple :
- identifiant du lot d'informations horodatées : « Evénement1_Timestamp » ;
- information extraite de la zone ZU_XY_1_F1 : <vide> ; et
- information extraite de la zone ZU_XY_2_F1 : <text1'>.

On suppose qu'après N secondes, la machine de calcul détecte un événement déclencheur et qu'une nouvelle diapositive (slide) a été affichée dans la fenêtre (et plus précisément dans la zone ZU_XY_2_F1) depuis la capture précédente (étape S2 précédente). La machine de calcul effectue une nouvelle itération des étapes S2, S3 et S4 pour la fenêtre F1. La nouvelle itération de l'étape S4 ne fournit pas les mêmes résultats que lors de l'itération précédente, puisque la machine de calcul extrait les informations suivantes de la zone applicative utile ZU_XY_2_F1 : <text2'> (au lieu de <text1'>). Puis la machine de calcul exécute l'étape S5 et la comparaison avec les éléments de la base de connaissance précédemment stockés pour la fenêtre F1 (lot d'informations horodatées portant l'identifiant « Evénement1_Timestamp ») indique qu'une nouvelle information <text2'> a été extraite. Le traitement se poursuit par l'étape S6 dans laquelle la machine de calcul met à jour l'activité « A2 : Conférence multimédia <NomDeLaPersonne> » dans la base de connaissance, en ajoutant un nouveau lot d'informations horodatées, comme par exemple :
- identifiant du lot d'informations horodatées : « Evénement1_Timestamp » ;
- information extraite de la zone ZU_XY_2_F1 : ADDED = <text2'>.

La **figure 3** présente un exemple de structure d'une machine de calcul 30 pour réaliser (exécuter) le procédé de la figure 1.

Cette structure comprend une mémoire vive 32 (par exemple une mémoire RAM), une mémoire morte 33 (par exemple une mémoire ROM ou un disque dur) et une unité de traitement 31 (équipée par exemple d'au moins un processeur, et pilotée par au moins un programme d'ordinateur 330 stocké dans la mémoire morte 33). A l'initialisation, les instructions de code du programme d'ordinateur 330 sont par exemple chargées dans la mémoire vive 32 avant d'être exécutées par le processeur de l'unité de traitement 31.

Cette figure 3 illustre seulement une manière particulière, parmi plusieurs possibles, d'implémenter une machine de calcul pour réaliser (exécuter) le procédé. En effet, la machine de calcul s'implémente indifféremment sous la forme d'une machine de calcul reprogrammable (un ordinateur PC, un processeur DSP ou un microcontrôleur) exécutant un programme comprenant une séquence d'instructions, ou sous la forme d'une machine de calcul dédiée (par exemple un ensemble de portes logiques comme un FPGA ou un ASIC, ou tout autre module matériel).

Dans le cas d'une implémentation sous la forme d'une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur. Alternativement, le medium de stockage peut être un circuit intégré dans lequel le programme est incorporé, le circuit étant adapté pour exécuter ou pour être utilisé dans l'exécution d'un procédé conforme à l'invention.

En variante, le medium de stockage peut être un support transmissible tel qu'un signal électrique ou optique, qui peut être acheminé via un câble électrique ou optique, par lien radio, par lien optique sans fil ou par d'autres moyens. Le programme selon l'invention peut être en particulier téléchargé sur un réseau de type Internet.

## Revendications

1. Procédé, mis en oeuvre par une machine de calcul (30), de construction d'une base de connaissance (DB) d'un utilisateur, le procédé comprenant au moins une mise à jour (S6) d'informations contenues dans la base de connaissance (DB) dudit utilisateur et relatives à un usage d'un terminal dudit utilisateur, en fonction d'informations extraites de zones applicatives utiles d'une image numérique d'une capture d'au moins une partie du rendu d'un écran du terminal, les zones applicatives utiles étant des zones contenant au moins une donnée fournie par au moins une application via ledit écran ou reçue par ladite application via une interface utilisateur dudit terminal et rendue sur ledit écran, **caractérisé en ce que**, lorsque le terminal permet l'affichage simultané de plusieurs fenêtres applicatives (F1 à F4) sur l'écran, dit multifenêtrage, ladite capture porte au moins sur une partie du rendu de l'écran correspondant à l'une des fenêtres applicatives et ladite au moins une mise à jour (S6) est effectuée sur détection d'un événement lié au multifenêtrage, et **en ce que**, pour une zone applicative utile d'une fenêtre applicative, ladite au moins une mise à jour (S6) est effectuée de façon conditionnelle en tenant compte d'un taux de recouvrement de ladite zone applicative utile par une ou plusieurs autres fenêtres applicatives, lesdites zones applicatives utiles excluant des zones de la fenêtre applicative réservées à une présentation de fonctionnalités de l'application.

2. Machine de calcul comprenant au moins un processeur configuré pour effectuer au moins une mise à jour (S6) d'informations d'usage contenues dans une base de connaissance (DB) d'un utilisateur et relatives à un usage d'un terminal dudit utilisateur, en fonction d'informations extraites de zones applicatives utiles d'une image numérique d'une capture d'au moins une partie du rendu d'un écran du terminal, les zones applicatives utiles étant des zones contenant au moins une donnée fournie par au moins une application via ledit écran ou reçue par ladite application via une interface utilisateur dudit terminal et rendue sur ledit écran, **caractérisé en ce que** le processeur est configuré pour que, lorsque le terminal permet l'affichage simultané de plusieurs fenêtres applicatives (F1 à F4) sur l'écran, dit multifenêtrage, ladite capture porte au moins sur une partie du rendu de l'écran correspondant à l'une des fenêtres applicatives et ladite au moins une mise à jour (S6) s'effectue sur détection d'un événement lié au multifenêtrage, et **en ce que**, pour une zone applicative utile d'une fenêtre applicative, ladite au moins une mise à jour (S6) est effectuée de façon conditionnelle en tenant compte d'un taux de recouvrement de ladite zone applicative utile par une ou plusieurs autres fenêtres applicatives, lesdites zones applicatives utiles excluant des zones de la fenêtre applicative réservées à une présentation de fonctionnalités de l'application.

3. Procédé selon la revendication 1 ou machine de calcul selon la revendication 2, **caractérisé en ce que** ladite capture porte sur la totalité du rendu de l'écran (20).

4. Procédé selon la revendication 1, **caractérisé en ce qu'**il comprend, ou machine de calcul selon la revendication 2 **caractérisée en ce que** ledit processeur est configuré pour effectuer, sur détection (E1) d'une ouverture d'une fenêtre applicative sur l'écran, un stockage (S1) dans la base de connaissance d'informations sur la position, la taille et/ou un rang d'affichage de la fenêtre applicative, et **en ce que**, pour une nouvelle mise à jour de la base de connaissance, la capture (S2) est fonction des informations sur la position, la taille et/ou le rang d'affichage.

5. Procédé selon la revendication 4 **caractérisé en ce que**, ou machine de calcul **caractérisée en ce que** ledit processeur est configuré pour que, au moins une mise à jour (S6) de la base de connaissance est effectuée dans une entrée distincte de la base de connaissance pour chacune des fenêtres applicatives.

6. Procédé selon la revendication 1 **caractérisé en ce que** ou machine de calcul selon la revendication 2 **caractérisée en ce que**, le taux de recouvrement de ladite zone applicative utile par une ou plusieurs autres fenêtres applicatives, est fonction :
- d'informations sur la position et/ou la taille de ladite zone applicative utile ;
- d'informations sur un rang d'affichage de la fenêtre applicative ; et/ou
- d'informations sur la position, la taille et/ou un rang d'affichage de la ou des autre(s) fenêtre(s) applicative(s).

7. Procédé selon la revendication 6 **caractérisé en ce que**, ou machine de calcul la revendication 6 **caractérisée en ce que** ledit processeur est configuré pour que, au moins une mise à jour (S6) de la base de connaissance, pour la zone applicative utile de la fenêtre applicative, est effectuée uniquement lorsque le taux de recouvrement est inférieur à une première valeur de recouvrement.

8. Procédé selon l'une quelconque des revendications 1 ou 3 à 7 **caractérisé en ce qu'**il comprend, ou machine de calcul selon l'une quelconque des revendications 2 à 7 **caractérisée en ce que** ledit processeur est configuré pour effectuer, sur détection (E3) d'un redimensionnement et/ou d'un déplacement d'une fenêtre applicative, un stockage dans la base de connaissance de nouvelles informations sur la position, la taille et/ou le rang d'affichage de la fenêtre applicative, et **en ce que**, pour chaque nouvelle mise à jour (S6) de la base de connaissance, la capture (S2) est fonction des nouvelles informations sur la position, la taille et/ou le rang d'affichage.

9. Procédé selon l'une quelconque des revendications 1 ou 3 à 8 **caractérisé en ce que**, ou machine de calcul selon l'une quelconque des revendications 2 à 8 **caractérisée en ce que** ledit processeur est configuré pour que, ladite au moins une mise à jour (S6) est effectuée sur détection (E2) d'une fermeture d'une fenêtre applicative.

10. Procédé selon l'une quelconque des revendications 1 ou 3 à 9 **caractérisé en ce que**, ou machine de calcul selon l'une quelconque des revendications 2 à 9 **caractérisée en ce que** ledit processeur est configuré pour que, les zones applicatives utiles sont des zones qui ne sont pas liées à une présentation de fonctionnalités de ladite au moins une application et pour laquelle une fenêtre applicative est affichée sur l'écran.

11. Procédé selon l'une quelconque des revendications 1 ou 3 à 10 **caractérisé en ce que**, ou machine de calcul selon l'une quelconque des revendications 2 à 10 **caractérisée en ce que** ledit processeur est configuré pour que, l'extraction (S4) d'informations des zones applicatives utiles comprend une extraction appartenant au groupe comprenant :
extraction d'informations sur du texte apparaissant dans les zones applicatives utiles, par une technique de reconnaissance optique de caractères ; et
extraction d'informations sur des éléments d'image apparaissant dans les zones applicatives utiles, par une technique de vision par ordinateur.

12. Procédé selon l'une quelconque des revendications 1 ou 3 à 11 **caractérisé en ce que**, ou machine de calcul selon l'une quelconque des revendications 2 à 11 **caractérisée en ce que** ledit processeur est configuré pour que, l'extraction (S4) d'informations des zones applicatives utiles tient compte d'un score de confiance de détection.

13. Produit programme d'ordinateur comprenant des instructions de code de programme qui, quand elles sont exécutées par une machine de calcul, provoquent la réalisation du procédé selon l'une des revendications 1 ou 3 à 12.

14. Medium de stockage lisible par ordinateur et non transitoire, stockant un programme d'ordinateur comprenant un jeu d'instructions exécutables par une machine de calcul pour mettre en oeuvre le procédé selon l'une des revendications 1 ou 3 à 12.

## Patentansprüche

1. Verfahren, das von einer Rechenmaschine (30) implementiert wird, zum Aufbauen einer Wissensbasis (DB) eines Benutzers, wobei das Verfahren mindestens eine Aktualisierung (S6) von Informationen umfasst, die in der Wissensbasis (DB) des Benutzers enthalten sind und sich auf eine Nutzung eines Endgeräts des Benutzers beziehen, in Abhängigkeit von Informationen, die aus nützlichen Anwendungsbereichen eines digitalen Bildes einer Aufnahme mindestens eines Teils der Wiedergabe eines Bildschirms des Endgeräts extrahiert werden, wobei die nützlichen Anwendungsbereiche Bereiche sind, die mindestens ein Datenelement enthalten, das von mindestens einer Anwendung über den Bildschirm ausgegeben oder von der Anwendung über eine Benutzerschnittstelle des Endgeräts empfangen und auf dem Bildschirm wiedergegeben wird, **dadurch gekennzeichnet, dass**, wenn das Endgerät das gleichzeitige Anzeigen von mehreren Anwendungsfenstern (F1 bis F4) auf dem Bildschirm, Mehrfenstertechnik genannt, ermöglicht, die Aufnahme mindestens einen Teil der Wiedergabe des Bildschirms betrifft, der einem der Anwendungsfenster entspricht, und die mindestens eine Aktualisierung (S6) beim Detektieren eines mit der Mehrfenstertechnik zusammenhängenden Ereignisses durchgeführt wird, und dass, für einen nützlichen Anwendungsbereich eines Anwendungsfensters, die mindestens eine Aktualisierung (S6) bedingt unter Berücksichtigung einer Überlappungsrate des nützlichen Anwendungsbereichs durch ein oder mehrere andere Anwendungsfenster durchgeführt wird, wobei die nützlichen Anwendungsbereiche Bereiche des Anwendungsfensters ausschließen, die einer Darstellung von Funktionalitäten der Anwendung vorbehalten sind.

2. Rechenmaschine, die mindestens einen Prozessor umfasst, der dazu ausgelegt ist, mindestens eine Aktualisierung (S6) von Nutzungsinformationen, die in einer Wissensbasis (DB) eines Benutzers enthalten sind und sich auf eine Nutzung eines Endgeräts des Benutzers beziehen, in Abhängigkeit von Informationen durchzuführen, die aus nützlichen Anwendungsbereichen eines digitalen Bildes einer Aufnahme mindestens eines Teils der Wiedergabe eines Bildschirms des Endgeräts extrahiert werden, wobei die nützlichen Anwendungsbereiche Bereiche sind, die mindestens ein Datenelement enthalten, das von mindestens einer Anwendung über den Bildschirm ausgegeben oder von der Anwendung über eine Benutzerschnittstelle des Endgeräts empfangen und auf dem Bildschirm wiedergegeben wird, **dadurch gekennzeichnet, dass** der Prozessor dazu ausgelegt ist, dass, wenn das Endgerät das gleichzeitige Anzeigen von mehreren Anwendungsfenstern (F1 bis F4) auf dem Bildschirm, Mehrfenstertechnik genannt, ermöglicht, die Aufnahme mindestens einen Teil der Wiedergabe des Bildschirms betrifft, der einem der Anwendungsfenster entspricht, und die mindestens eine Aktualisierung (S6) beim Detektieren eines mit der Mehrfenstertechnik zusammenhängenden Ereignisses durchgeführt wird, und dass, für einen nützlichen Anwendungsbereich eines Anwendungsfensters, die mindestens eine Aktualisierung (S6) bedingt unter Berücksichtigung einer Überlappungsrate des nützlichen Anwendungsbereichs durch ein oder mehrere andere Anwendungsfenster durchgeführt wird, wobei die nützlichen Anwendungsbereiche Bereiche des Anwendungsfensters ausschließen, die einer Darstellung von Funktionalitäten der Anwendung vorbehalten sind.

3. Verfahren nach Anspruch 1 oder Rechenmaschine nach Anspruch 2, **dadurch gekennzeichnet, dass** die Aufnahme die gesamte Wiedergabe des Bildschirms (20) betrifft.

4. Verfahren nach Anspruch 1, **dadurch gekennzeichnet, dass** es umfasst, oder Rechenmaschine nach Anspruch 2, **dadurch gekennzeichnet, dass** der Prozessor dazu ausgelegt ist, beim Detektieren (E1) eines Öffnens eines Anwendungsfensters auf dem Bildschirm eine Speicherung (S1) in der Wissensbasis von Informationen über die Position, die Größe und/oder einen Anzeigerang des Anwendungsfensters durchzuführen, und dass bei einer neuen Aktualisierung der Wissensbasis die Aufnahme (S2) von den Informationen über die Position, die Größe und/oder den Anzeigenrang abhängig ist.

5. Verfahren nach Anspruch 4, **dadurch gekennzeichnet, dass**, oder Rechenmaschine, **dadurch gekennzeichnet, dass** der Prozessor dazu ausgelegt ist, dass mindestens eine Aktualisierung (S6) der Wissensbasis in einem separaten Eintrag der Wissensbasis für jedes der Anwendungsfenster durchgeführt wird.

6. Verfahren nach Anspruch 1, **dadurch gekennzeichnet, dass**, oder Rechenmaschine nach Anspruch 2, **dadurch gekennzeichnet, dass** die Überlappungsrate des nützlichen Anwendungsbereichs durch ein oder mehrere andere Anwendungsfenster abhängig ist von:
- Informationen über die Position und/oder die Größe des nützlichen Anwendungsbereichs;
- Informationen über einen Anzeigerang des Anwendungsfensters; und/oder
- Informationen über die Position, die Größe und/oder einen Anzeigerang des oder der anderen Anwendungsfenster(s).

7. Verfahren nach Anspruch 6, **dadurch gekennzeichnet, dass**, oder Rechenmaschine nach Anspruch 6, **dadurch gekennzeichnet, dass** der Prozessor dazu ausgelegt ist, dass mindestens eine Aktualisierung (S6) der Wissensbasis für den nützlichen Anwendungsbereich des Anwendungsfensters nur durchgeführt wird, wenn die Überlappungsrate kleiner als ein erster Überlappungswert ist.

8. Verfahren nach einem der Ansprüche 1 oder 3 bis 7, **dadurch gekennzeichnet, dass** es umfasst, oder Rechenmaschine nach einem der Ansprüche 2 bis 7, **dadurch gekennzeichnet, dass** der Prozessor dazu ausgelegt ist, beim Detektieren (E3) einer Größenänderung und/oder einer Verschiebung eines Anwendungsfensters eine Speicherung von neuen Informationen über die Position, die Größe und/oder den Anzeigerang des Anwendungsfensters in der Wissensbasis durchzuführen, und dass bei jeder neuen Aktualisierung (S6) der Wissensbasis die Aufnahme (S2) von den neuen Informationen über die Position, die Größe und/oder den Anzeigerang abhängig ist.

9. Verfahren nach einem der Ansprüche 1 oder 3 bis 8, **dadurch gekennzeichnet, dass**, oder Rechenmaschine nach einem der Ansprüche 2 bis 8, **dadurch gekennzeichnet, dass** der Prozessor dazu ausgelegt ist, dass die mindestens eine Aktualisierung (S6) beim Detektieren (E2) eines Schließens eines Anwendungsfensters durchgeführt wird.

10. Verfahren nach einem der Ansprüche 1 oder 3 bis 9, **dadurch gekennzeichnet, dass**, oder Rechenmaschine nach einem der Ansprüche 2 bis 9, **dadurch gekennzeichnet, dass** der Prozessor dazu ausgelegt ist, dass die nützlichen Anwendungsbereiche Bereiche sind, die nicht mit einer Darstellung von Funktionalitäten der mindestens einen Anwendung verknüpft sind und für die ein Anwendungsfenster auf dem Bildschirm angezeigt wird.

11. Verfahren nach einem der Ansprüche 1 oder 3 bis 10, **dadurch gekennzeichnet, dass**, oder Rechenmaschine nach einem der Ansprüche 2 bis 10, **dadurch gekennzeichnet, dass** der Prozessor dazu ausgelegt ist, dass das Extrahieren (S4) von Informationen aus den nützlichen Anwendungsbereichen ein Extrahieren umfasst, das zu der Gruppe gehört, die Folgendes umfasst:
Extrahieren von Informationen über Text, der in den nützlichen Anwendungsbereichen erscheint, durch eine Technik zur optischen Zeichenerkennung; und Extrahieren von Informationen über Bildelemente, die in den nützlichen Anwendungsbereichen erscheinen, durch eine Computer-Vision-Technik.

12. Verfahren nach einem der Ansprüche 1 oder 3 bis 11, **dadurch gekennzeichnet, dass**, oder Rechenmaschine nach einem der Ansprüche 2 bis 11, **dadurch gekennzeichnet, dass** der Prozessor dazu ausgelegt ist, dass das Extrahieren (S4) von Informationen aus den nützlichen Anwendungsbereichen einen Detektionskonfidenzscore berücksichtigt.

13. Computerprogrammprodukt, das Programmcodeanweisungen umfasst, die bei ihrer Ausführung durch eine Rechenmaschine die Ausführung des Verfahrens nach einem der Ansprüche 1 oder 3 bis 12 bewirken.

14. Computerlesbares und nichtflüchtiges Speichermedium, das ein Computerprogramm speichert, das einen Satz von Anweisungen umfasst, die durch eine Rechenmaschine ausführbar sind, um das Verfahren nach einem der Ansprüche 1 oder 3 bis 12 zu implementieren.

## Claims

1. Method, implemented by a computing machine (30), for constructing a knowledge base (DB) of a user, the method comprising at least one update (S6) of information contained in the knowledge base (DB) of said user and relating to a use of a terminal of said user, based on information extracted from useful application areas of a digital image of a capture of at least part of the rendering of a screen of the terminal, the useful application areas being areas containing at least one datum supplied by at least one application via said screen or received by said application via a user interface of said terminal and rendered on said screen, **characterized in that**, when the terminal allows the simultaneous display of multiple application windows (F1 to F4) on the screen, referred to as multi-windowing, said capture relates at least to part of the rendering of the screen corresponding to one of the application windows and said at least one update (S6) is carried out upon detection of an event related to the multi-windowing, and **in that**, for a useful application area of an application window, said at least one update (S6) is carried out conditionally, taking into account a degree of overlap by which said useful application area is overlapped by one or more other application windows, said useful application areas excluding areas of the application window that are reserved for presenting functionalities of the application.

2. Computing machine comprising at least one processor configured to carry out at least one update (S6) of use information contained in a knowledge base (DB) of a user and relating to a use of a terminal of said user, based on information extracted from useful application areas of a digital image of a capture of at least part of the rendering of a screen of the terminal, the useful application areas being areas containing at least one datum supplied by at least one application via said screen or received by said application via a user interface of said terminal and rendered on said screen, **characterized in that** the processor is configured so that, when the terminal allows the simultaneous display of multiple application windows (F1 to F4) on the screen, referred to as multi-windowing, said capture relates at least to part of the rendering of the screen corresponding to one of the application windows and said at least one update (S6) is carried out upon detection of an event related to the multi-windowing, and **in that**, for a useful application area of an application window, said at least one update (S6) is carried out conditionally, taking into account a degree of overlap by which said useful application area is overlapped by one or more other application windows, said useful application areas excluding areas of the application window that are reserved for presenting functionalities of the application.

3. Method according to Claim 1 or computing machine according to Claim 2, **characterized in that** said capture relates to the entire rendering of the screen (20).

4. Method according to Claim 1, **characterized in that** it comprises, or computing machine according to Claim 2, **characterized in that** said processor is configured to carry out, upon detection (E1) of opening of an application window on the screen, storage (S1) of information about the position, size and/or a display rank of the application window in the knowledge base, and **in that**, for a new update of the knowledge base, the capture (S2) depends on the information about the position, size and/or display rank.

5. Method according to Claim 4, **characterized in that**, or computing machine, **characterized in that** said processor is configured so that, at least one update (S6) of the knowledge base is carried out in a distinct entry of the knowledge base for each of the application windows.

6. Method according to Claim 1, **characterized in that**, or computing machine according to Claim 2, **characterized in that**, the degree of overlap by which said useful application area is overlapped by one or more other application windows depends on:
- information about the position and/or size of said useful application area;
- information about a display rank of the application window; and/or
- information about the position, size and/or a display rank of the one or more other application window (s) .

7. Method according to Claim 6, **characterized in that**, or computing machine according to Claim 6, **characterized in that** said processor is configured so that, at least one update (S6) of the knowledge base, for the useful application area of the application window, is carried out only when the degree of overlap is less than a first overlap value.

8. Method according to any one of Claims 1 or 3 to 7, **characterized in that** it comprises, or computing machine according to any one of Claims 2 to 7, **characterized in that** said processor is configured to carry out, upon detection (E3) of resizing and/or movement of an application window, storage of new information about the position, size and/or display rank of the application window in the knowledge base, and **in that**, for each new update (S6) of the knowledge base, the capture (S2) depends on the new information about the position, size and/or display rank.

9. Method according to any one of Claims 1 or 3 to 8, **characterized in that**, or computing machine according to any one of Claims 2 to 8, **characterized in that** said processor is configured so that, said at least one update (S6) is carried out upon detection (E2) of closure of an application window.

10. Method according to any one of Claims 1 or 3 to 9, **characterized in that**, or computing machine according to any one of Claims 2 to 9, **characterized in that** said processor is configured so that, the useful application areas are areas that are not linked to presenting functionalities of said at least one application and for which an application window is displayed on the screen.

11. Method according to any one of Claims 1 or 3 to 10, **characterized in that**, or computing machine according to any one of Claims 2 to 10, **characterized in that** said processor is configured so that, the extraction (S4) of information from the useful application areas comprises an extraction belonging to the group comprising:
extraction of information about text appearing in the useful application areas, using an optical character recognition technique; and extraction of information about image elements appearing in the useful application areas, using a computer vision technique.

12. Method according to any one of Claims 1 or 3 to 11, **characterized in that**, or computing machine according to any one of Claims 2 to 11 **characterized in that** said processor is configured so that, the extraction (S4) of information from the useful application areas takes into account a detection confidence score.

13. Computer program product comprising program code instructions that, when they are executed by a computing machine, cause the method according to one of Claims 1 or 3 to 12 to be performed.

14. Non-transient computer-readable storage medium storing a computer program comprising a set of instructions able to be executed by a computing machine for implementing the method according to one of Claims 1 or 3 to 12.
